# EUROPEAN PATENT APPLICATION

(11) **EP 4 653 928 A1**
(43) Date of publication of application: **26.11.2025**
(21) Application number: 24221172.0
(22) Date of filing: 18.12.2024
(51) Int. Cl.: G02B 6/44

(54) **STRAIN RELIEF SYSTEM FOR FIBER OPTIC TERMINALS**

(30) Priority: 23.05.2024 US 202463651016 P
(71) Applicant: Corning Research & Development Corporation, Corning, New York 14831 (US)
(72) Inventor: GAUDYNSKA, Marta Eliza, 93-142 Lodz (PL); KLAK, Robert Tomasz, 98220 Zdunska Wola (PL); KRECZMER, Wojciech, 91-849 Lodz (PL); NITKA, Grzegorz, 90-752 Lodz (PL)
(74) Representative: Reddie & Grose LLP

(57) **Abstract**

The present disclosure relates to a strain relief system that is configured to accommodate at least one cable and is accessible on both sides of the system (from an inside of a fiber optic terminal or an outside of the fiber optic terminal). The strain relief system includes various structures to accommodate cables of different sizes.

## Description

This application claims the benefit of priority of U.S. Provisional Application No. 63/651,016, filed on May 23, 2024, the content of which is relied upon and incorporated herein by reference in its entirety.

### FIELD

The present disclosure relates to fiber optic terminal components and more particularly, to a strain relief system for fiber optic terminals.

### BACKGROUND

Cables (such as used to carry communication fiber) are often routed in and out of communications equipment cabinets and other enclosures in order to connect with various communications equipment. The cables are often secured at the entry point(s) into the enclosures to maintain a certain arrangement, and in some cases, to provide added stability. Current securing mechanisms include cable glands, cable ties, sealing foams, or other structures that require additional tools for installation. Cable glands are expensive and require a high level of skill from installers. Alternatively, although cable ties are less expensive than cable glands, cable ties cause problems over time. Both cable glands and cable ties require the installer to measure the outer diameter of the cable being installed and then to use a properly sized cable gland or cable tie wrap, accordingly, which requires additional time and is sometimes difficult when space is limited.

Other devices have been used in enclosures that attempt to control the positioning of cables and to form a seal around the cables, but these devices frequently have many limitations. The devices often have round cutouts where cables may be received, but such devices often have a limited ability to be used with cables having different sizes. For example, where round cutouts are provided and a large cable and a small cable are used with the same device, the round cutouts will often be too large for the small cables, allowing the small cables to shift within the round cutout and preventing the small cable from having an effective seal. Alternatively, the round cutouts may be too small for large cables, preventing the large cables from being used with the device. Previous solutions required tear-out sections or multiple sealing elements to hold cables having different sizes, adding more costs and making installation more burdensome/complex.

Improvements in the foregoing are desired.

### SUMMARY

In general, the present disclosure relates to a strain relief system that is configured to accommodate at least one cable and is accessible on both sides of the system (from an inside of a fiber optic terminal or an outside of the fiber optic terminal). The strain relief system includes various structures to accommodate cables of different sizes.

In one embodiment, a strain relief system is provided. The strain relief system comprising: a first end; a second end spaced from the first end; a body spanning from the first end to the second end, the body defining a cable passageway configured to accommodate at least one cable from the first end to the second end, the body including: a cable engagement member spaced from the first end to define an access space where the at least one cable can be accessed; and a base engagement member at the second end.

In another embodiment, the base engagement member comprises a vertical portion extending from the body of the strain relief system and a horizontal portion integrally formed with the vertical portion, wherein the horizontal portion is angled at about 90 degrees relative to the vertical portion. In another embodiment, the body further includes a plurality of raised members to engage with a cable when the cable is inserted into the strain relief system. In another embodiment, the cable passageway comprises a first cable passageway and a second cable passageway, and wherein the first cable passageway and the second cable passageway are configured to accommodate a first cable and a second cable, respectively. In another embodiment, the first cable passageway and the second cable passageway are each configured to respectively accommodate the first cable and the second cable each having an outer diameter of up to 3 mm. In another embodiment, the cable engagement member is configured to engage with the outer diameters of the first cable and the second cable. In another embodiment, the cable passageway is configured to accommodate a cable having an outer diameter of up to 8 mm. In another embodiment, the cable engagement member engages with the outer diameter of the cable.

In one embodiment, a strain relief system is provided. The strain relief system comprising: a first strain relief system comprising: a first end; a second end spaced from the first end; a first body spanning from the first end to the second end, the first body defining a first cable passageway configured to accommodate at least one cable from the first end to the second end, the first body including: a first cable engagement member spaced from the first end to define a first access space where the at least one cable can be accessed; and a first base engagement member at the second end; a second strain relief system spaced from the first strain relief system, the second strain relief system comprising: a third end; a fourth end spaced from the third end; a second body spanning from the third end to the fourth end, the second body defining a second cable passageway configured to accommodate the at least one cable from the third end to the fourth end, the second body including: a second cable engagement member spaced from the third end to define a second access space where the at least one cable can be accessed; and a second base engagement member at the fourth end; a connecting structure that couples the first strain relief system to the second strain relief system.

In another embodiment, at least one of the first base engagement member or the second base engagement member comprises: a vertical portion extending from at least one of the first body or the second body; and a horizontal portion integrally formed with the vertical portion; wherein the horizontal portion is angled at about 90 degrees relative to the vertical portion. In another embodiment, at least one of the first body or the second body further includes a plurality of raised members to engage with the at least one cable when the at least one cable is inserted into the strain relief system. In another embodiment, at least one of the first cable passageway or the second cable passageway comprises a first mini cable passageway and a second mini cable passageway, the first mini cable passageway and the second mini cable passageway are configured to accommodate a first cable and a second cable, respectively. In another embodiment, the first cable passageway and the second cable passageway are each configured to respectively accommodate the first cable and the second cable each having an outer diameter of up to 3 mm. In another embodiment, at least one of the first cable engagement member or the second cable engagement member is configured to engage with the outer diameters of the first cable and the second cable. In another embodiment, at least one of the first cable passageway or the second cable passageway is configured to accommodate a cable having an outer diameter of up to 8 mm. In another embodiment, at least one of the first cable engagement member or the second cable engagement member engages with the outer diameter of the cable. In another embodiment, the first cable passageway and the second cable passageway are aligned to form a continuous passageway for the at least one cable.

In one embodiment, an optical enclosure is provided. The optical enclosure comprising: a plurality of cable port entries that each define a respective cable routing path, wherein each cable port entry comprises: an inner frame and an outer frame spaced from the inner frame; wherein the inner frame and the outer frame define the cable routing path; a pair of inner hooks extending from the inner frame, wherein the inner hooks are spaced apart from each other with the cable routing path therebetween; a pair of outer hooks extending from the outer frame, wherein the outer hooks are spaced apart from each other with the cable routing path therebetween; a strain relief system comprising: a first strain relief system comprising: a first end; a second end spaced from the first end; a first body spanning from the first end to the second end, the first body defining a first cable passageway configured to accommodate at least one cable from the first end to the second end, the first body including: a first cable engagement member spaced from the first end to define a first access space where the at least one cable can be accessed; and a first base engagement member at the second end, the first base engagement member engaging with at least one of the pair of inner hooks; a second strain relief system spaced from the first strain relief system, the second strain relief system comprising: a third end; a fourth end spaced from the third end; a second body spanning from the third end to the fourth end, the second body defining a second cable passageway configured to accommodate the at least one cable from the third end to the fourth end, the second body including: a second cable engagement member spaced from the third end to define a second access space where the at least one cable can be accessed; and a second base engagement member at the fourth end, the second base engagement member engaging with at least one of the pair of outer hooks; and a connecting structure that couples the first strain relief system to the second strain relief system, wherein the connecting structure extends from the inner frame to the outer frame.

In another embodiment, at least one of the first base engagement member or the second base engagement member comprises: a vertical portion extending from at least one of the first body or the second body; and a horizontal portion integrally formed with the vertical portion; wherein the horizontal portion is angled at about 90 degrees relative to the vertical portion. In another embodiment, at least one of the first body or the second body further includes a plurality of raised members to engage with the at least one cable when the at least one cable is inserted into the strain relief system. In another embodiment, at least one of the first cable passageway or the second cable passageway comprises a first mini cable passageway and a second mini cable passageway, and wherein the first mini cable passageway and the second mini cable passageway are configured to accommodate a first cable and a second cable, respectively. In another embodiment, the first cable passageway and the second cable passageway are each configured to respectively accommodate the first cable and the second cable each having an outer diameter of up to 3 mm. In another embodiment, at least one of the first cable engagement member or the second cable engagement member is configured to engage with the outer diameters of the first cable and the second cable. In another embodiment, at least one of the first cable passageway or the second cable passageway is configured to accommodate a cable having an outer diameter of up to 8 mm. In another embodiment, at least one of the first cable engagement member or the second cable engagement member engages with the outer diameter of the cable. In another embodiment, the first cable passageway and the second cable passageway are aligned to form a continuous passageway for the at least one cable.

Additional features and advantages are set forth in the Detailed Description that follows, and in part will be readily apparent to those skilled in the art from the description or recognized by practicing the embodiments as described in the written description and claims hereof, as well as the appended drawings. It is to be understood that both the foregoing general description and the following Detailed Description are merely exemplary, and are intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the Detailed Description serve to explain principles and operation of the various embodiments. As such, the disclosure will become more fully understood from the following Detailed Description, taken in conjunction with the accompanying Figures, in which:
FIG. 1 is a perspective view of a fiber optic terminal in a closed position in accordance with the present disclosure;
FIG. 2 is a perspective view of the fiber optic terminal of FIG. 1 in an open position in accordance with the present disclosure;
FIG. 3 is a perspective view of a plurality of cable port entries for the fiber optic terminal of FIG. 1 in accordance with the present disclosure;
FIG. 4 is an enlarged perspective view of one of the plurality of cable port entries of FIG. 3 in accordance with the present disclosure;
FIG. 5 is a perspective view of an alternate embodiment of a plurality of cable port entries for the fiber optic terminal of FIG. 1 in accordance with the present disclosure;
FIGS. 6A and 6B are enlarged perspective views of one of the plurality of cable port entries of FIG. 5 in accordance with the present disclosure;
FIG. 7 is a perspective view of the plurality of cable port entries of FIG. 3 with various strain relief assemblies applied thereon in accordance with the present disclosure;
FIG. 8 is a perspective view of the plurality of cable port entries of FIG. 3 with other various strain relief assemblies and adapters applied thereon in accordance with the present disclosure;
FIG. 9 is a top view of the plurality of cable port entries of FIG. 5 with strain relief devices applied thereon in accordance with the present disclosure;
FIG. 10 is a perspective view of a strain relief system in accordance with the present disclosure;
FIG. 11 is a side view of the strain relief system of FIG. 10 in accordance with the present disclosure;
FIG. 12 is a front view of the strain relief system of FIG. 10 in accordance with the present disclosure;
FIG. 13 is a perspective view of an alternate strain relief system in accordance with the present disclosure;
FIG. 14 is a side view of the alternate strain relief system of FIG. 13 in accordance with the present disclosure;
FIG. 15 is a front view of the alternate strain relief system of FIG. 13 in accordance with the present disclosure;
FIGS. 16A and 16B are perspective views of the strain relief system of FIG. 9 with one and two cables inserted through the strain relief system, respectively; and
FIGS. 17A and 17B are perspective views of a half of the strain relief system of FIG. 9 with one and two cables inserted through the strain relief system, respectively.

### DETAILED DESCRIPTION

Various embodiments will be clarified by examples in the description below. In general, the present disclosure relates to a strain relief system that is configured to accommodate at least one cable and is accessible on both sides of the system (from an inside of a fiber optic terminal or an outside of the fiber optic terminal). The strain relief system includes various structures to accommodate cables of different sizes.

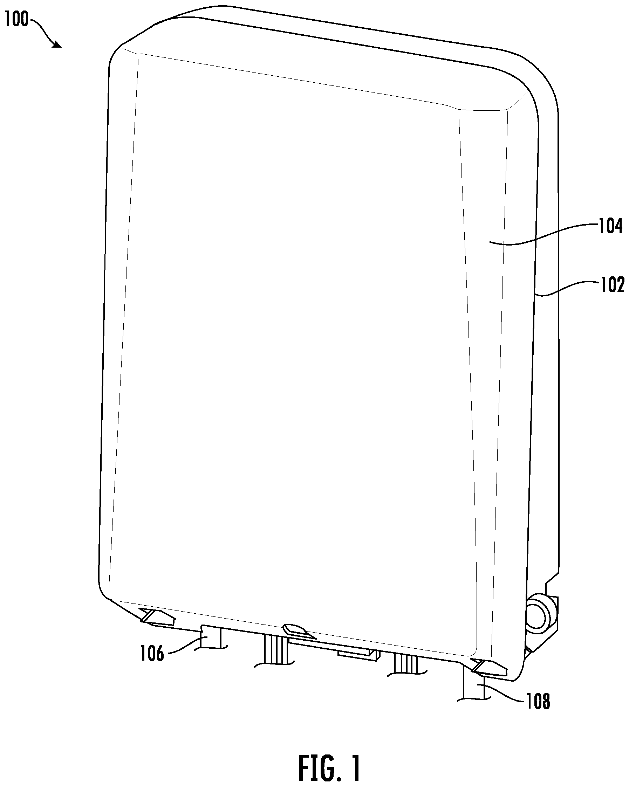

FIG. 1 illustrates an example enclosure 100, which may be installed within a communications architecture (e.g., on a building, other structure, or otherwise within a network). The enclosure 100 includes a back portion 102 and a cover 104, which in FIG. 1 is shown as being in a closed position. The enclosure 100 also includes an inlet feeder cable 106 that enters the enclosure 100 at a first location (e.g., on the left) and an outlet feeder cable 108 that exits the enclosure 100 at a second location (e.g., on the right). It should be appreciated that, in other embodiments, the inlet feeder cable 106 and/or the outlet feeder cable 108 may enter or exit the enclosure 100 at any other location, and further, in some embodiments, the inlet feeder cable 106 and/or the outlet feeder cable 108 may enter and exit at a same location.

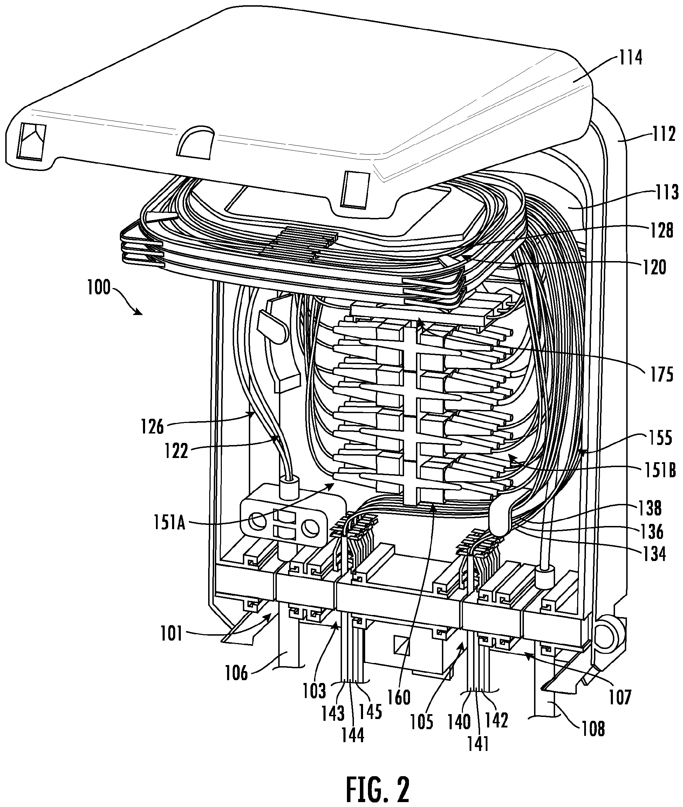

Referring now to FIG. 2, FIG. 2 illustrates enclosure 100, which may also be installed within a communications architecture (e.g., on a building, other structure, or otherwise within a network) in an open position. Enclosure 100 defines a first cable port entry 101, a second cable port entry 103, a third cable port entry 105, and a fourth cable port entry 107. Some of the cable port entries shown are configured to receive an inlet feeder cable 106, while others are configured to receive the outlet feeder cable 108 or other optical fiber cables (e.g., cables 140, 141, 144) depending on the application. While four (4) cable port entries are shown in FIG. 2, it is within the scope of the present disclosure that an alternate number of cable port entries may be used within enclosure 100 depending on the application. As mentioned previously, enclosure 100 includes an inlet feeder cable 106 that enters the enclosure 100 at a first location (e.g., on the left through a first cable port entry 101) and an outlet feeder cable 108 that exits the enclosure 100 at a second location (e.g., on the right through a fourth cable port entry 107). As described above, it should be appreciated that, in other embodiments, the inlet feeder cable 106 and/or the outlet feeder cable 108 may enter or exit the enclosure 100 at any other location, and further, in some embodiments, the inlet feeder cable 106 and/or the outlet feeder cable 108 may enter and exit at a same location.

Within the enclosure 100 is a base structure 113 that is configured with a plurality of splice tray attachment features (not shown) configured to optionally receive one or more splice trays 120. Some or all of the one or more splice trays 120 may include splice features such as splice features 128 that are configured to enable splicing of fibers when routed therethrough. In addition, the enclosure 100 further includes a splitter 175 within base structure 100 as shown.

After the input feeder cable 106 is routed into the base structure 113 through the first cable port entry 101, the input feeder cable 106 may comprise one or more cables and/or fibers. In the embodiment shown in FIG. 2 and for illustrative purposes, the input feeder cable 106 comprises at least a first cable and/or fiber 122 and a second cable and/or fiber 126. The first cable and/or fiber 122 may be routed through base structure 113 and into splice tray 120 where the first cable and/or fiber 122 is spliced with one of the optical fibers and connectorized to form connector pigtail(s) 151B that are routed within base structure 113 into patch panel 160. The second cable and/or fiber 126 may be routed through base 113 into splice tray 120 where the second cable and/or fiber 126 is splice with one of the input fibers of splitter 175. The spliced fiber(s) is/are routed through base 113 into a splitter 175 (as an input fiber of splitter 175) where output fibers 177 of splitter 175 are then connectorized to form pigtail(s) 151B that are then routed within base 113 into patch panel 160.

While the above description describes input cables and/or fibers being spliced in splice tray 120 and then patched into patch panel 160 or spliced in splice tray 120 and then split in splitter 175 and then patched into patch panel 160, it is within the scope of the present disclosure that alternate combinations of splicing, splitting, and patching may occur on input cables and/or fibers within enclosure 100 (e.g., splice-split-splice, patch-split-patch, splice-patch-split-patch, or splice-patch-split-patch-splice, etc.).

As shown in FIG. 2, output cables 140-145 enter through enclosure 100 via second cable port entry 103 and third cable port entry 105. In the embodiment shown in FIG. 2 and for illustrative purposes, the output cables 140-145 include output fibers 155 are routed through base structure 113 and into splice tray 120 where the output fibers 155 are spliced with optical fibers of the connector pigtail(s) 151A that are routed within base structure 113 into patch panel 160.

In some embodiments, the cable and/or fiber 122 or 126 may be fed into splice tray 120 where the cable and/or fiber 122, 126 are spliced with optical fibers of output cable 108. In this way, the cable and/or fiber 122, 126 is configured to continue into another enclosure as another input feeder cable (e.g., via output feeder cable 108).

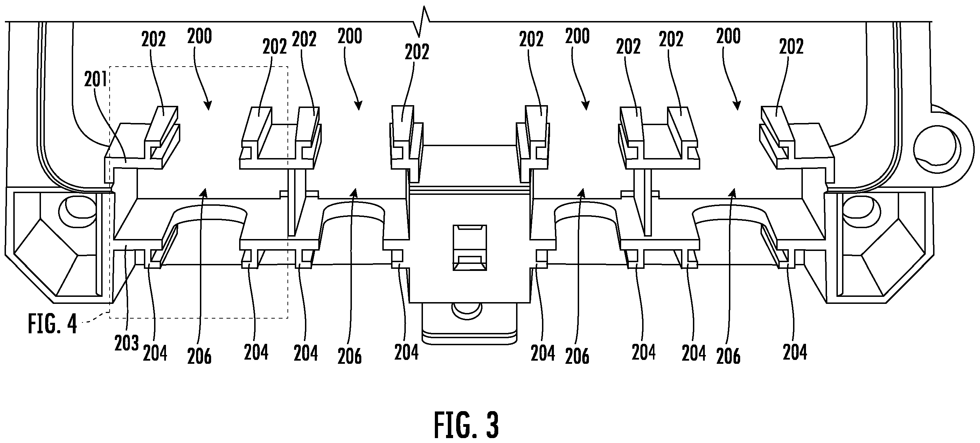

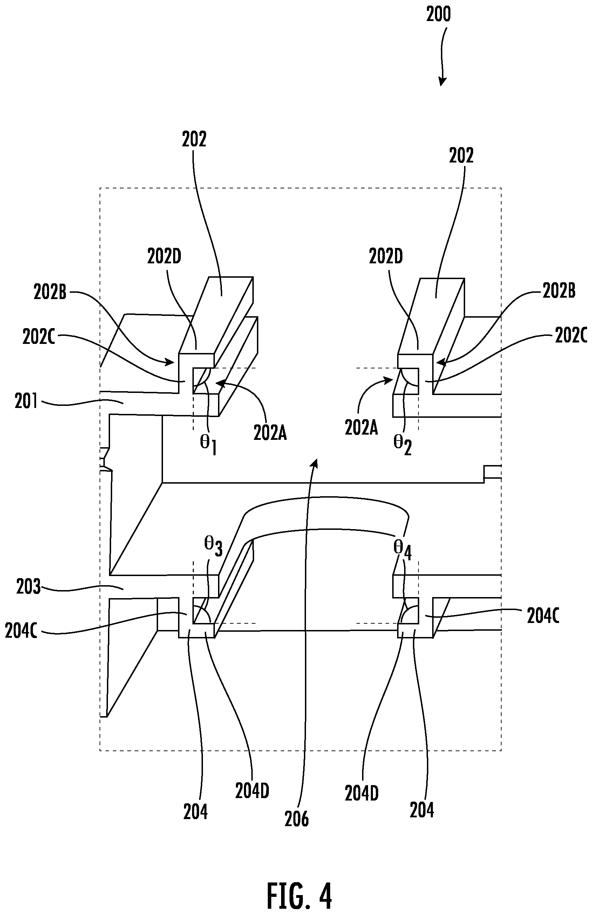

Referring now to FIGS. 3 and 4, a first embodiment of cable port entries 200 is shown for enclosure 100. Cable port entry 200 comprises an inner frame 201 and an outer frame 203 spaced from inner frame 201. The configuration of inner frame 201 and outer frame 203 defines a cable routing path 206 through which at least one cable can pass from an exterior of enclosure 100 to an interior of enclosure 100. The space between the inner frame 201 and the outer frame 203 is sized to receive a sealing element (e.g., foam member) to provide a seal around an inserted cable.

Extending from the inner frame 201 is a pair of inner hooks 202 that are spaced apart from each other with the cable routing path 206 therebetween. In particular and as shown in FIG. 4, each inner hook 202 includes an inner portion 202A and an outer portion 202B where the inner portion 202A faces the cable routing path 206. Furthermore, in this embodiment, each inner hook 202 includes a vertical portion 202C that is integrally formed with the inner frame 201 and extends from the inner frame 201. Each inner hook 202 further includes a horizontal portion 202D that is integrally formed with vertical portion 202C at an angle θ_{1'} θ₂ with vertical portion 202C. In some embodiments, an angle θ_{1'} θ₂ between vertical portion 202C and horizontal portion 202D ranges between about 45 degrees and about 90 degrees. In some embodiments, the angle θ_{1'} θ₂ between vertical portion 202C and horizontal portion 202D is about 90 degrees.

Similar to inner hooks 202, a pair of outer hooks 204 extend from the outer frame 203. As shown, outer hooks 204 are spaced apart from each other with the cable routing path 206 therebetween. In particular, and as shown in FIG. 4, each outer hook 204 includes an inner portion 204A and an outer portion 204B where the inner portion 204A faces the cable routing path 206. Furthermore, in this embodiment, each outer hook 204 includes a vertical portion 204C that is integrally formed with the outer frame 203 and extends from the outer frame 203. Each outer hook 204 further includes a horizontal portion 204D that is integrally formed with vertical portion 204C at an angle θ_{3'} θ₄ with vertical portion 204C. In some embodiments, an angle θ_{3'} θ₄ between vertical portion 204C and horizontal portion 204D ranges between about 45 degrees and about 90 degrees. In some embodiments, the angle θ_{3'} θ₄ between vertical portion 204C and horizontal portion 204D is about 90 degrees. In some embodiments, inner hooks 202 and outer hooks 204 are L-shaped.

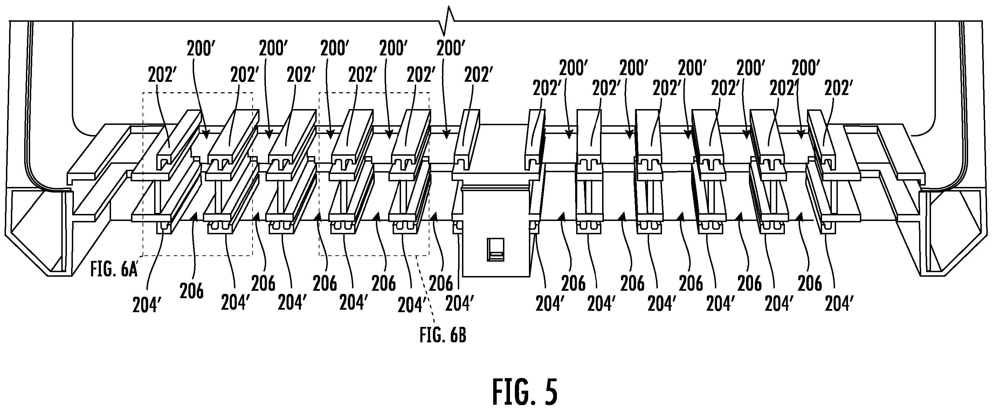

Referring now to FIGS. 5-6B, another embodiment of cable port entries 200' is shown for enclosure 100. Cable port entry 200' comprises an inner frame 201 and an outer frame 203 spaced from inner frame 201. The configuration of inner frame 201 and outer frame 203 defines a cable routing path 206 through which at least one cable can pass from an exterior of enclosure 100 to an interior of enclosure 100. The space between the inner frame 201 and the outer frame 203 is sized to receive a sealing element (e.g., foam member) to provide a seal around an inserted cable.

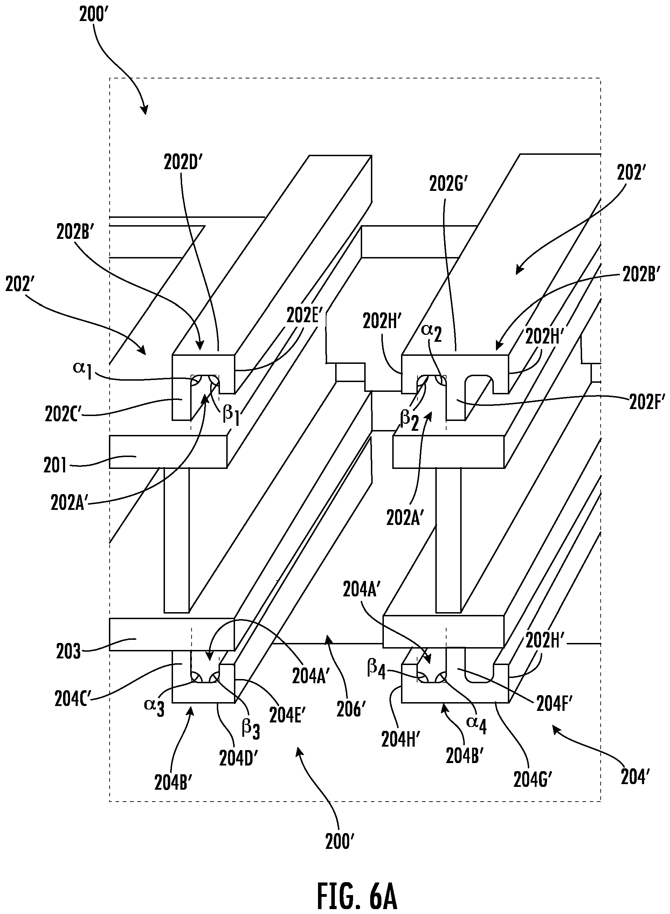

Extending from the inner frame 201 is a pair of inner hooks 202' that are spaced apart from each other with the cable routing path 206 therebetween. Referring first to FIG. 6A, the pair of inner hooks 202' comprises a first inner hook and a second inner hook where the first inner hook is r-shaped and the second inner hook is T-shaped. The first inner hook includes an inner portion 202A' and an outer portion 202B' where the inner portion 202A' faces the cable routing path 206. The first inner hook also includes a first vertical portion 202C' integrally formed with inner frame 201 and extending from inner frame 201. The first inner hook also includes a horizontal portion 202D' that is integrally formed with first vertical portion 202C' at an angle α₁ with first vertical portion 202C', and the first inner hook includes a second vertical portion 202E' that is integrally formed with horizontal portion 202D' and extending from horizontal portion 202D' at an angle β₁. In some embodiments, an angle α₁ between first vertical portion 202C' and horizontal portion 202D' ranges between about 45 degrees and about 90 degrees. In some embodiments, the angle α₁ between first vertical portion 202C' and horizontal portion 202D' is about 90 degrees. In some embodiments, an angle β₁ between second vertical portion 202E' and horizontal portion 202D' ranges between about 90 degrees and about 135 degrees. In some embodiments, the angle β₁ between second vertical portion 202E' and horizontal portion 202D' is about 90 degrees.

In this embodiment, the second inner hook includes inner portion 202A' and outer portion 202B' where the inner portion 202A' faces the cable routing path 206. The second inner hook also includes a first vertical portion 202F' integrally formed with inner frame 201 and extending from inner frame 201. The second inner hook also includes a horizontal portion 202G' that is integrally formed with first vertical portion 202F' at an angle α₂ with first vertical portion 202F', and the first inner hook includes a second vertical portion 202H' that is integrally formed with horizontal portion 202G' and extending from horizontal portion 202G' at an angle βz. In some embodiments, an angle α₂ between first vertical portion 202F' and horizontal portion 202G' ranges between about 45 degrees and about 90 degrees. In some embodiments, the angle α₂ between first vertical portion 202F' and horizontal portion 202G' is about 90 degrees. In some embodiments, an angle βz between second vertical portion 202H' and horizontal portion 202G' ranges between about 90 degrees and about 135 degrees. In some embodiments, the angle βz between second vertical portion 202H' and horizontal portion 202G' is about 90 degrees.

Similar to inner hooks 202', a pair of outer hooks 204' extend from the outer frame 203. With continued reference to FIG. 6A, the pair of outer hooks 204' comprises a first outer hook and a second outer hook where the first outer hook is r-shaped and the second outer hook is T-shaped. The first outer hook includes an inner portion 204A' and an outer portion 204B' where the inner portion 204A' faces the cable routing path 206. The first outer hook also includes a first vertical portion 204C' integrally formed with inner frame 201 and extending from inner frame 201. The first outer hook also includes a horizontal portion 204D' that is integrally formed with first vertical portion 204C' at an angle α₃ with first vertical portion 204C', and the first outer hook includes a second vertical portion 204E' that is integrally formed with horizontal portion 204D' and extending from horizontal portion 204D' at an angle β₃. In some embodiments, an angle α₃ between first vertical portion 202C' and horizontal portion 202D' ranges between about 45 degrees and about 90 degrees. In some embodiments, the angle α₃ between first vertical portion 202C' and horizontal portion 202D' is about 90 degrees. In some embodiments, an angle β₃ between second vertical portion 202E' and horizontal portion 202D' ranges between about 90 degrees and about 135 degrees. In some embodiments, the angle β₃ between second vertical portion 202E' and horizontal portion 202D' is about 90 degrees.

In this embodiment, the second outer hook includes inner portion 204A' and outer portion 204B' where the inner portion 204A' faces the cable routing path 206. The second outer hook also includes a first vertical portion 204F' integrally formed with inner frame 201 and extending from inner frame 201. The second outer hook also includes a horizontal portion 204G' that is integrally formed with first vertical portion 204F' at an angle α₄ with first vertical portion 204F' where the horizontal portion 202G' extend beyond a thickness of first vertical portion 202F'. Further, the first outer hook includes a second vertical portion 204H' that is integrally formed with horizontal portion 204G' and extending from horizontal portion 204G' at an angle β₄. In some embodiments, an angle α₄ between first vertical portion 202F' and horizontal portion 202G' ranges between about 45 degrees and about 90 degrees. In some embodiments, the angle α₄ between first vertical portion 202F' and horizontal portion 202G' is about 90 degrees. In some embodiments, an angle β₄ between second vertical portion 202H' and horizontal portion 202G' ranges between about 90 degrees and about 135 degrees. In some embodiments, the angle β₄ between second vertical portion 202H' and horizontal portion 202G' is about 90 degrees.

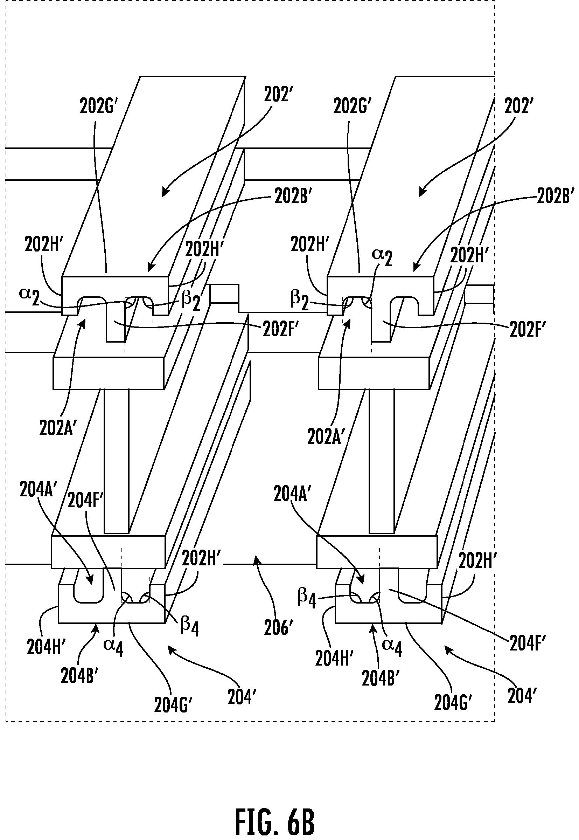

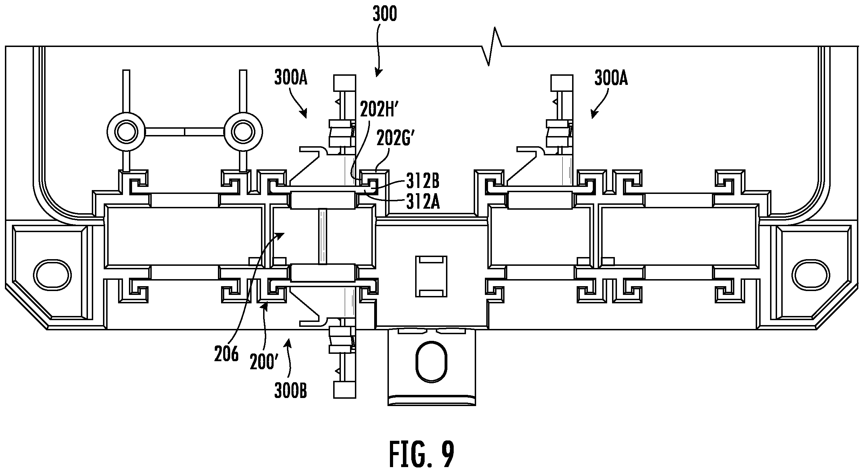

While the above description relates to a first inner or first outer hook being r-shaped and a second inner or second outer hook being T-shaped, it is within the scope of the present disclosure that alternate combinations of shaped hooks are possible, such as an embodiment where both hooks are r-shaped as shown in FIG. 9 or where both hooks are T-shaped as shown in FIG. 6B and described in greater detail below.

Referring now to FIG. 6B, another embodiment of cable port entries 200' is shown for enclosure 100. In particular, in FIG. 6B, a pair of inner hooks 202' extend from inner frame 201 and are spaced apart from each other with the cable routing path 206 therebetween. The pair of inner hooks 202' comprises a first inner hook and a second inner hook where the first inner hook and the second inner hook are T-shaped. The first and second inner hooks include an inner portion 202A' and an outer portion 202B' where the inner portion 202A' faces the cable routing path 206. The first inner hook and the second outer hook also include a first vertical portion 202F' integrally formed with inner frame 201 and extending from inner frame 201. The first and second inner hooks also include a horizontal portion 202G' that is integrally formed with first vertical portion 202F' at an angle α₂ with first vertical portion 202F' where the horizontal portion 202G' extend beyond a thickness of first vertical portion 202F'. Further, the first and second inner hooks includes a second vertical portion 202H' that is integrally formed with horizontal portion 202G' and extending from horizontal portion 202G' at an angle β₂. In some embodiments, an angle α₂ between first vertical portion 202F' and horizontal portion 202G' ranges between about 45 degrees and about 90 degrees. In some embodiments, the angle α₂ between first vertical portion 202F' and horizontal portion 202G' is about 90 degrees. In some embodiments, an angle β₂ between second vertical portion 202H' and horizontal portion 202G' ranges between about 90 degrees and about 135 degrees. In some embodiments, the angle β₂ between second vertical portion 202H' and horizontal portion 202G' is about 90 degrees.

Similar to inner hooks 202', a pair of outer hooks 204' extend from the outer frame 203. With continued reference to FIG. 6B, the pair of outer hooks 204' comprises a first outer hook and a second outer hook where the first outer hook and the second outer hook are T-shaped. The first and second inner hooks include an inner portion 202A' and an outer portion 202B' where the inner portion 202A' faces the cable routing path 206. The first inner hook and the second outer hook also include a first vertical portion 202F' integrally formed with inner frame 201 and extending from inner frame 201. The first and second inner hooks also include a horizontal portion 202G' that is integrally formed with first vertical portion 202F' at an angle α₄ with first vertical portion 202F' where the horizontal portion 202G' extend beyond a thickness of first vertical portion 202F'. Further, the first and second inner hooks includes a second vertical portion 202H' that is integrally formed with horizontal portion 202G' and extending from horizontal portion 202G' at an angle β₄. In some embodiments, an angle α₄ between first vertical portion 202F' and horizontal portion 202G' ranges between about 45 degrees and about 90 degrees. In some embodiments, the angle α₄ between first vertical portion 202F' and horizontal portion 202G' is about 90 degrees. In some embodiments, an angle β₄ between second vertical portion 202H' and horizontal portion 202G' ranges between about 90 degrees and about 135 degrees. In some embodiments, the angle β₄ between second vertical portion 202H' and horizontal portion 202G' is about 90 degrees.

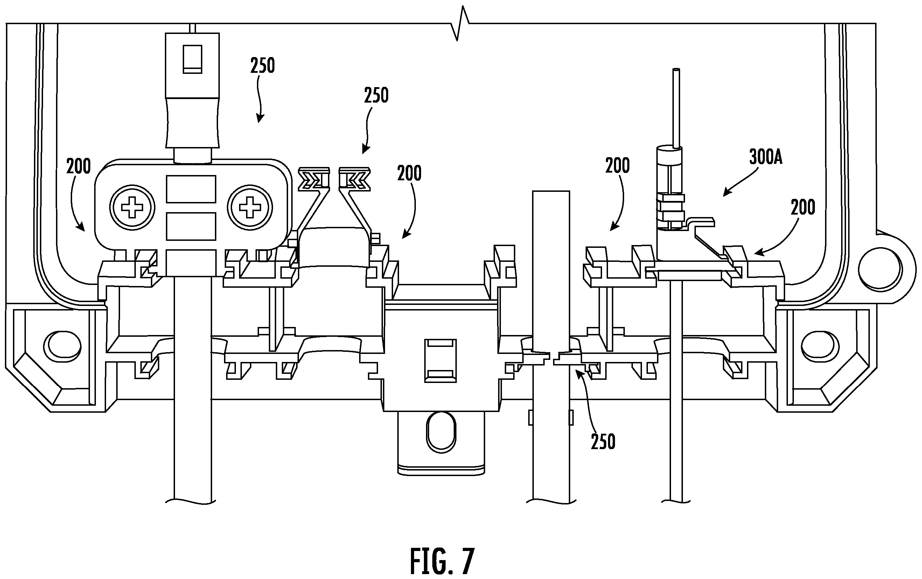

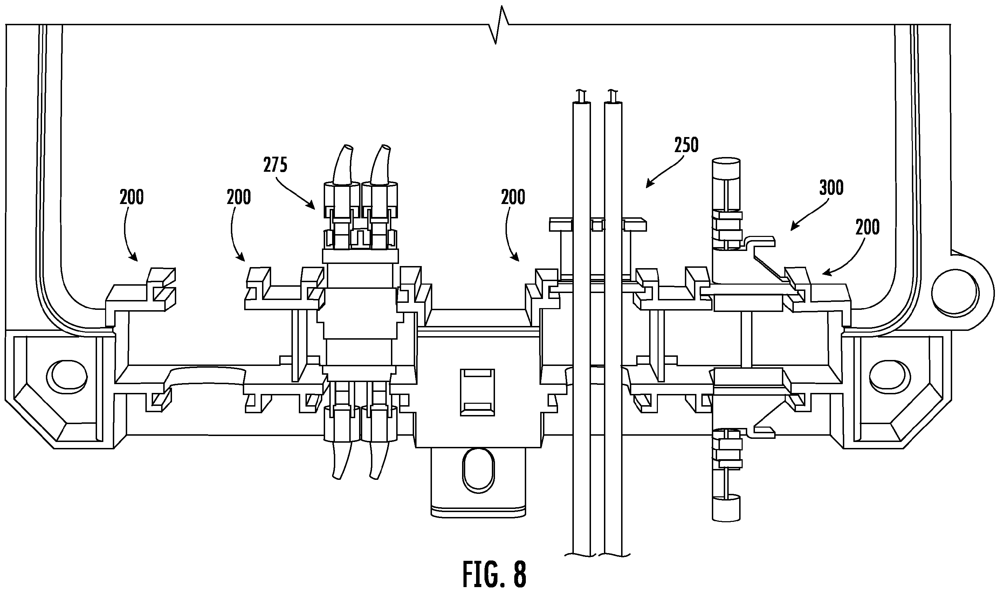

Advantageously, the cable port entry configurations of the present disclosure enable a variety of optical hardware to be used. As shown in FIGS. 7 and 8, cable port entries 200 can accommodate various strain relief assemblies 250, 300, 300A or a connector adapter 275 as shown. In particular, various strain relief assemblies 250, 300, 300A engage with at least one of inner hooks 202 or outer hooks 204, and at least one cable can be fed through the cable routing path 206 of the cable port entry 200 and through the various strain relief assemblies 250, 300, 300A. Also, as shown, connector adapter 275 is received between the inner frame 201 and the outer frame 203, and connector adapter 275 engages with at least one of the inner hooks 202 or outer hooks 204. While the configuration of cable port entry 200 is shown, it is within the scope of the present disclosure that the configurations of cable port entries 200' can be used to accommodate various optical hardware as well.

Referring now to FIG. 9, an enclosure 100 is shown with cable port entries 200' having inner hooks 202' and outer hooks 204' that are r-shaped. The cable port entry 200' receives a strain relief system 300 that is configured to receive at least one cable that is fed through cable routing path 206 and provide strain relief for the at least one cable.

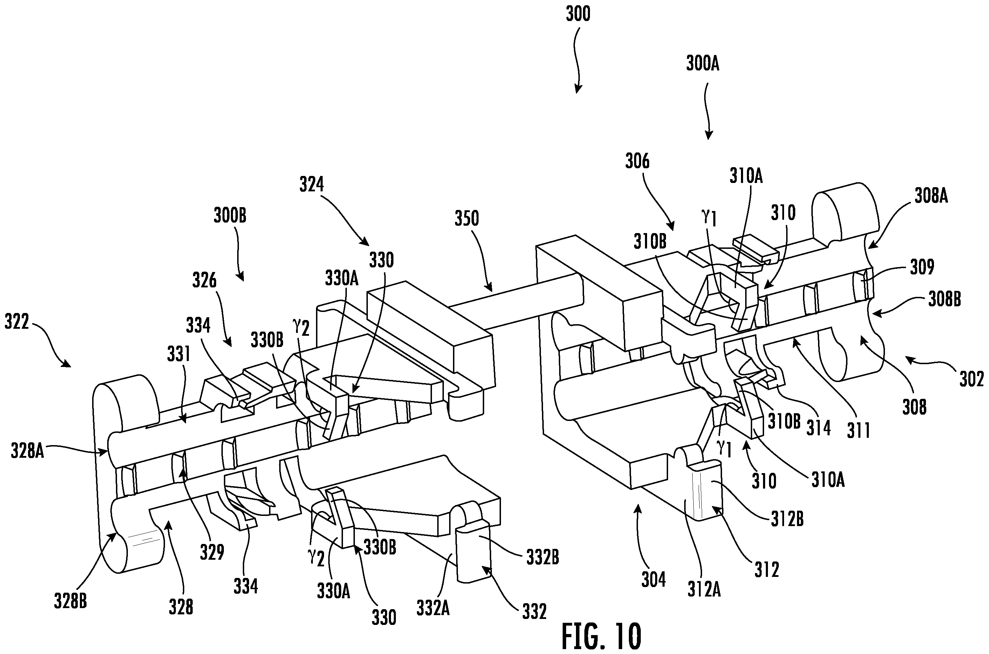

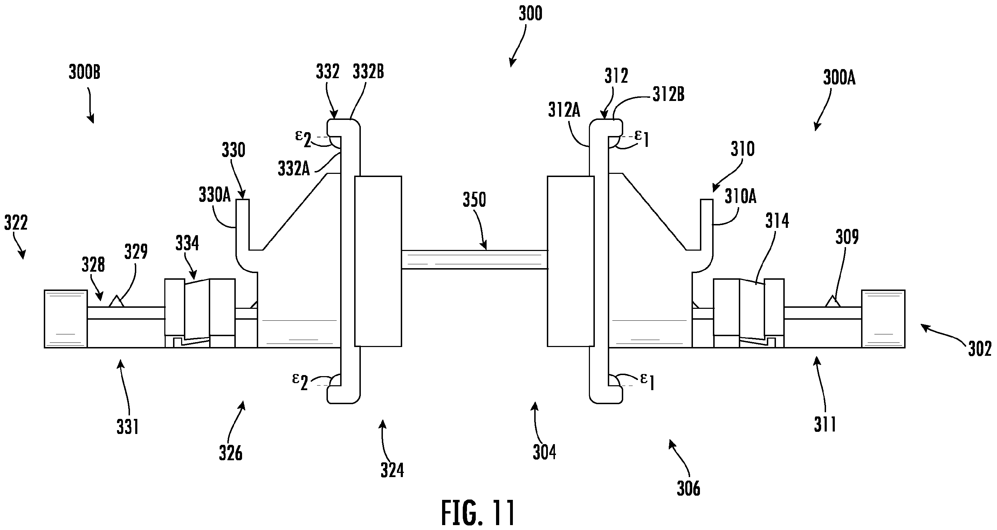

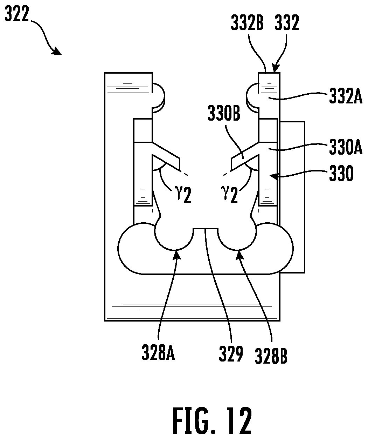

Referring now to FIGS. 10-12, strain relief system 300 comprises a first strain relief system 300A and a second strain relief system 300B that is coupled to the first strain relief system 300A with a connecting structure 350. First strain relief system 300A comprises a first end 302 and a second end 304 that is spaced from the first end 302. First strain relief system 300A has a first body 306 that spans from first end 302 to second end 304 where the first body 306 defines a cable passageway 308 that is configured to accommodate at least one cable from the first end 302 to the second end 304. As shown, cable passageway 308 comprises a first mini cable passageway 308A and a second mini cable passageway 308B. However, it is within the scope of the present disclosure that a different number of cable passageways may be present within the first body 306. First body 306 also comprises a plurality of raised members 309 that are configured to engage with a cable that is inserted into the first strain relief system 300A. In some embodiments, the plurality of raised members 309 are integrally formed with the first body 306.

First body 306 also comprises a cable engagement member 310 and a base engagement member 312. Cable engagement member 310 is spaced from first end 302 to define a first access space 311 to access an inserted cable. Cable engagement member 310 includes a vertical portion 310A and an angled protrusion 310B that is configured to engaged with an outer diameter of an inserted cable. In some embodiments, angled protrusion 310B has an angle γ₁ relative to the vertical portion 310A ranging between about 45 degrees and about 90 degrees. In some embodiments, angled protrusion 310B has an angle γ₁ relative to the vertical portion 310A of about 45 degrees.

Base engagement member 312 is located at the second end 304 of the first body 302 and is configured to engage with the base structure 113 of enclosure 100. In particular, base engagement member 312 of the first strain relief system 300A engages with the pair of inner hooks 202, 202' of cable port entries 200, 200'. Base engagement member 312 comprises a vertical portion 312A extending from the first body 302 and a horizontal portion 312B integrally formed with and extending from vertical portion 312A at an angle ε₁. In some embodiments, an angle ε₁ between vertical portion 312A and horizontal portion 312B ranges between about 45 degrees and about 135 degrees. In some embodiments, the angle ε₁ between vertical portion 312A and horizontal portion 312B is about 90 degrees. When engaged with the inner hooks 202, 202' of cable port entries 200, 200', horizontal portion 312B fits within inner portion 202A, 202A' of inner hooks 202, 202' such that horizontal portion 312 engages with the horizontal portion 202G' and the second vertical portion 202H' to secure the strain relief system 300A with the cable port entries 200, 200'.

First body 306 further comprises a securing structure 314 that is configured to accommodate additional securing means to provide further engagement with an inserted cable(s). In particular, in some embodiments, securing structure 314 accommodates the use of cable ties or Kevlar to provide further engagement with inserted cable(s). However, it is within the scope of the present disclosure that securing structure 314 can accommodate alternate suitable securing mechanisms.

Like first strain relief system 300A, second strain assembly 300B comprises a third end 322 and a fourth end 324 that is spaced from the third end 322. Second strain relief system 300B has a second body 326 that spans from third end 322 to fourth end 324 where the second body 326 defines a cable passageway 328 that is configured to accommodate at least one cable from the third end 322 to the fourth end 324. As shown, cable passageway 328 comprises a first mini cable passageway 328A and a second mini cable passageway 328B. However, it is within the scope of the present disclosure that a different number of cable passageways may be present within the first body 326. When first strain relief system 300A and second strain relief system 300B are coupled together, the cable passageway 308 of the first strain relief system 300A is continuous with the cable passageway 328 of the second strain relief system 300B. Similarly, when first strain relief system 300A and second strain relief system 300B are coupled together, the first mini cable passageway 308A of the first strain relief system 300A is continuous with the first mini cable passageway 328A of the second strain relief system 300B. Likewise, the second mini cable passageway 308B of the first strain relief system 300A is continuous with the second mini cable passageway 328B of the second strain relief system 300B. First body 326 also comprises a plurality of raised members 329 that are configured to engage with a cable that is inserted into the first strain relief system 300B. In some embodiments, the plurality of raised members 329 are integrally formed with the first body 326.

Second body 326 also comprises a cable engagement member 310 and a base engagement member 312. Cable engagement member 330 is spaced from first end 322 to define a first access space 331 to access an inserted cable. Cable engagement member 330 includes a vertical portion 330A and an angled protrusion 330B that is configured to engaged with an outer diameter of an inserted cable. In some embodiments, angled protrusion 330B has an angle γ₂ relative to the vertical portion 330A ranging between 45 degrees and about 90 degrees. In some embodiments, angled protrusion 330B has an angle γ₂ relative to the vertical portion 330A of about 45 degrees.

Base engagement member 332 is located at the second end 324 of the first body 322 and is configured to engage with the base structure 113 of enclosure 100. In particular, base engagement member 332 of the first strain relief system 300B engages with the pair of outer hooks 204, 204' of cable port entries 200, 200'. Base engagement member 332 comprises a vertical portion 332A extending from the first body 322 and a horizontal portion 332B integrally formed with and extending from vertical portion 332A at an angle ε₂. In some embodiments, an angle ε₂ between vertical portion 332A and horizontal portion 332B ranges between about 45 degrees and about 135 degrees. In some embodiments, the angle ε₂ between vertical portion 332A and horizontal portion 332B is about 90 degrees. When engaged with the outer hooks 204, 204' of cable port entries 200, 200', horizontal portion 332B fits within inner portion 204A, 204A' of outer hooks 204, 204' such that horizontal portion 332 engages with the horizontal portion 202G' and the second vertical portion 202H' to secure the strain relief system 300B with the cable port entries 200, 200'.

First body 326 further comprises a securing structure 334 that is configured to accommodate additional securing means to provide further engagement with an inserted cable(s). In particular, in some embodiments, securing structure 334 accommodates the use of cable ties or Kevlar to provide further engagement with inserted cable(s). However, it is within the scope of the present disclosure that securing structure 334 can accommodate alternate suitable securing mechanisms.

As mentioned previously, a connecting structure 350 couples the first strain relief system 300A to the second strain relief system 300B. As shown, when inserting strain relief system 300 into a cable port entry 200, 200', connecting structure 350 spans the space between the inner hooks 202, 202' and the outer hooks 204, 204'. Stated another way, connecting structure 350 spans the cable routing path 206 from the inner hooks 202, 202' to the outer hooks 204, 204'. In some embodiments, connecting structure is integrally formed with the first strain relief system 300A and the second strain relief system 300B. However, it is within the scope of the present disclosure that in some embodiments, connecting structure 350 is a component that is separate from first strain relief system 300A and second strain relief system 300B.

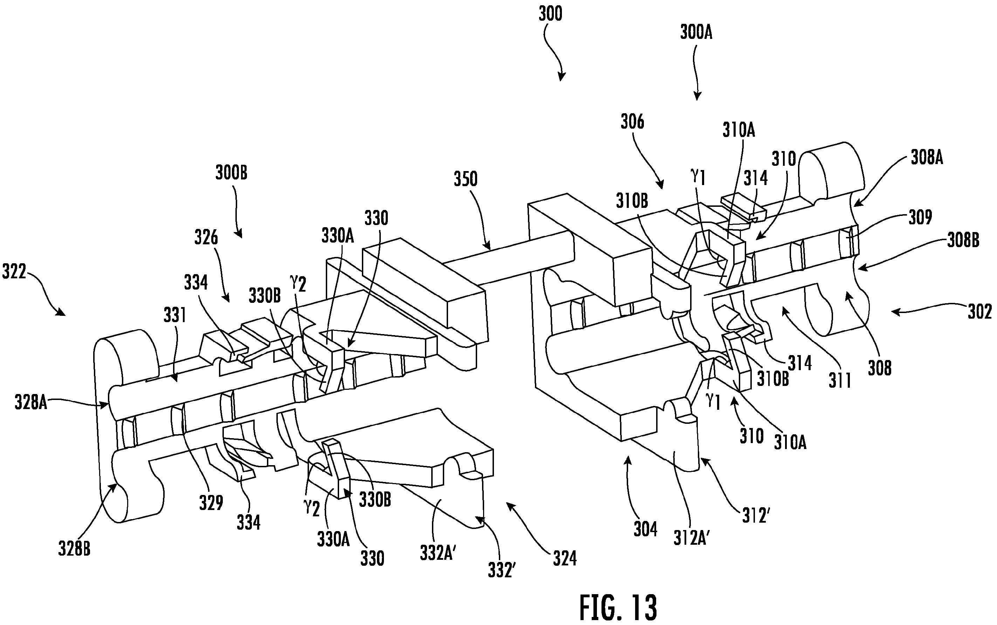

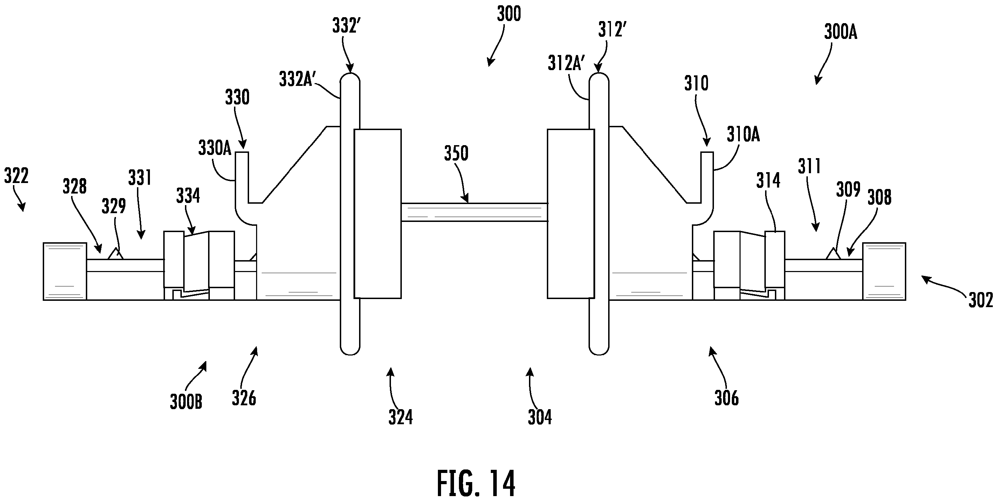

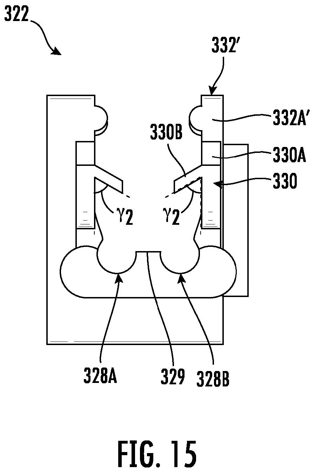

Referring now to FIGS. 13-15, an alternate embodiment of strain relief system 300 is shown. As shown, this embodiment of strain relief system 300 is the same as the strain relief system 300 shown and described in FIGS. 10-12 (as indicated with like reference numbers) except with base engagement members 312', 332'. As shown, base engagement 312', 332' comprises a single structure 312A', 332A' without a horizontal portion and a vertical portion as disclosed with respect to base engagement member 312, 332.

The different configurations of base engagement member 312, 312', 332, 332' enable the strain relief system 300 to be coupled to different configurations of the cable port entries 200, 200'. In particular, strain relief system 300 with base engagement members 312, 332 are configured to couple to inner hooks 202', 204' that are either r-shaped or T-shaped as shown in FIG. 9. Similarly, strain relief system 300 with base engagement members 312', 332' are configured to couple to inner hooks 202, 204 that are L-shaped as shown in FIGS. 7 and 8.

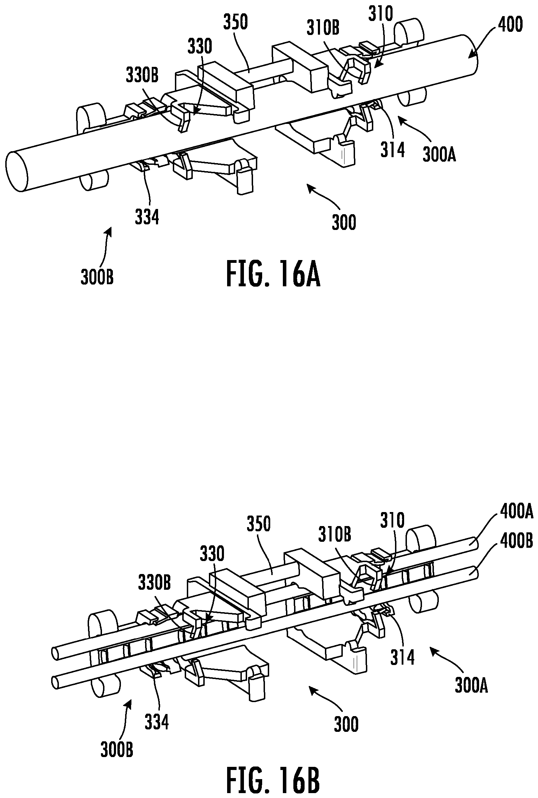

Referring now to FIGS. 16A and 16B, a strain relief system 300 is shown with one (1) cable 400 and two (2) cables 400, respectively, fed through. Referring first to FIG. 16A, a cable 400 is inserted into the strain relief system 300. As shown, the cable engagement members 310, 330 engage with the outer diameter of cable 400. More particularly, angled protrusions 310B, 330B engage with the outer diameter of cable 400. In addition, the plurality of raised member 309, 329 engage with the cable 400 opposite of the cable engagement members 310, 330. In some embodiments, cable ties or Kevlar can be used to further secure cable 400 at securing structures 314, 334 within strain relief system 300. In some embodiments, cable 400 has an outer diameter of up to 8 mm.

Referring now to FIG. 16B, a first cable 400A and a second cable 400B are inserted into strain relief system 300. As shown, the first cable 400A and the second cable 400B are inserted into the first mini cable passageways 308A, 328A and the second mini cable passageways 308B, 328B. In this embodiment, the cable engagement members 310, 330 are unable to contact the outer diameters of first cable 400A and second cable 400B. Instead, cable ties or Kevlar are used to further secure first and second cables 400A, 400B at securing structures 314, 334 within strain relief system 300. In some embodiments, first cable 400A and second cable 400B each have an outer diameter of up to 3 mm.

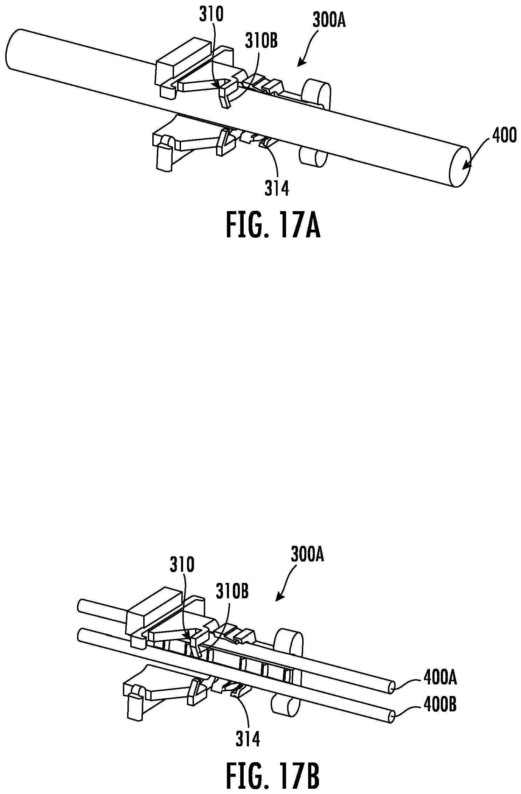

Referring now to FIGS. 17A and 17B, a first strain relief system 300A is shown with one (1) cable 400 and two (2) cables 400, respectively, fed through. Referring first to FIG. 17A, a cable 400 is inserted into the first strain relief system 300A. As shown, the cable engagement members 310 engage with the outer diameter of cable 400. More particularly, angled protrusions 310B engage with the outer diameter of cable 400. In addition, the plurality of raised member 309 engage with the cable 400 opposite of the cable engagement members 310. In some embodiments, cable ties or Kevlar can be used to further secure cable 400 at securing structures 314 within first strain relief system 300A. In some embodiments, cable 400 has an outer diameter of up to 8 mm.

Referring now to FIG. 17B, a first cable 400A and a second cable 400B are inserted into first strain relief system 300A. As shown, the first cable 400A and the second cable 400B are inserted into the first mini cable passageway 308A and the second mini cable passageway 308B. In this embodiment, the cable engagement members 310 are unable to contact the outer diameters of first cable 400A and second cable 400B. Instead, cable ties or Kevlar are used to further secure first and second cables 400A, 400B at securing structures 314 within strain relief system 300. In some embodiments, first cable 400A and second cable 400B each have an outer diameter of up to 3 mm.

It will be apparent to those skilled in the art that various modifications to the preferred embodiments of the disclosure as described herein can be made without departing from the spirit or scope of the disclosure as defined in the appended claims.

Thus, the disclosure covers the modifications and variations provided they come within the scope of the appended claims and the equivalents thereto.

## Claims

1. A strain relief system comprising:
a first end;
a second end spaced from the first end;
a first body spanning from the first end to the second end, the first body defining a first cable passageway configured to accommodate at least one cable from the first end to the second end, the first body including:
a first cable engagement member spaced from the first end to define a first access space where the at least one cable can be accessed; and
a first base engagement member at the second end.

2. The strain relief system of claim 1, wherein the first base engagement member comprises a vertical portion extending from the body of the strain relief system and a horizontal portion integrally formed with the vertical portion, wherein the horizontal portion is angled at about 90 degrees relative to the vertical portion.

3. The strain relief system of claim 1 or claim 2, wherein the first body further includes a plurality of raised members to engage with a cable when the cable is inserted into the strain relief system.

4. A strain relief system comprising:
a first strain relief system of any of claims 1- 3;
a second strain relief system spaced from the first strain relief system, the second strain relief system comprising:
a third end;
a fourth end spaced from the third end;
a second body spanning from the third end to the fourth end, the second body defining a second cable passageway configured to accommodate the at least one cable from the third end to the fourth end, the second body including:
a second cable engagement member spaced from the third end to define a second access space where the at least one cable can be accessed; and
a second base engagement member at the fourth end;
a connecting structure that couples the first strain relief system to the second strain relief system.

5. The strain relief system of claim 4, wherein at least one of the first base engagement member or the second base engagement member comprises:
a vertical portion extending from at least one of the first body or the second body; and
a horizontal portion integrally formed with the vertical portion;
wherein the horizontal portion is angled at about 90 degrees relative to the vertical portion.

6. The strain relief system of claim 4 or claim 5, wherein at least one of the first body or the second body further includes a plurality of raised members to engage with the at least one cable when the at least one cable is inserted into the strain relief system.

7. The strain relief system of any of claims 1-6, wherein at least one of the first cable passageway or the second cable passageway comprises a first mini cable passageway and a second mini cable passageway, the first mini cable passageway and the second mini cable passageway are configured to accommodate a first cable and a second cable, respectively.

8. The strain relief system of claim 7, wherein the first cable passageway and the second cable passageway are each configured to respectively accommodate the first cable and the second cable each having an outer diameter of up to 3 mm.

9. The strain relief system of claim 8, wherein at least one of the first cable engagement member or the second cable engagement member is configured to engage with the outer diameters of the first cable and the second cable.

10. The strain relief system of any of claims 1-9, wherein at least one of the first cable passageway or the second cable passageway is configured to accommodate a cable having an outer diameter of up to 8 mm.

11. The strain relief system of any of claims 1-10, wherein the first cable passageway and the second cable passageway are aligned to form a continuous passageway for the at least one cable.

12. An optical enclosure comprising:
a plurality of cable port entries that each define a respective cable routing path, wherein each cable port entry comprises:
an inner frame and an outer frame spaced from the inner frame;
wherein the inner frame and the outer frame define the cable routing path;
a pair of inner hooks extending from the inner frame, wherein the inner hooks are spaced apart from each other with the cable routing path therebetween;
a pair of outer hooks extending from the outer frame, wherein the outer hooks are spaced apart from each other with the cable routing path therebetween;
a strain relief system of any of claims 1-11, wherein the first base engagement member engaging with at least one of the pair of inner hooks; and wherein the second base engagement member engaging with at least one of the pair of outer hooks; and
wherein the connecting structure extends from the inner frame to the outer frame.
